# FASCICULE DE BREVET EUROPEEN

(11) **EP 1 474 314 B1**
(45) Date de publication et mention de la délivrance du brevet: **11.01.2006**
(21) Numéro de dépôt: 03717393.7
(22) Date de dépôt: 11.02.2003
(51) Int. Cl.: B60R 13/08, G10K 11/16, G10K 11/172

(54) **PROCEDE D'INSONORISATION, PIECE INSONORISANTE ET ENSEMBLE CORRESPONDANT**
VERFAHREN ZUR SCHALLDÄMPFUNG, SCHALLDÄMPFUNGSELEMENT UND ENTSPRECHENDE ANORDNUNG
SOUNDPROOFING METHOD, A SOUNDPROOFING PART AND THE CORRESPONDING ASSEMBLY

(30) Priorité: 12.02.2002 FR 0201706
(43) Date de publication de la demande: 10.11.2004
(73) Titulaire: Faurecia Automotive Industrie, 92000 Nanterre (FR)
(72) Inventeur: DUVAL, Arnaud, D-35518 GIFHORN (DE); MARCEL, Valérie, F-55150 Brandeville (FR)
(74) Mandataire: Arnaud, Jean
(86) Numéro de dépôt international: PCT/FR2003/000431
(87) Numéro de publication internationale: WO 2003/068563

(56) Documents cités:
- EP-A- 1 022 721
- DE-A- 3 313 001
- US-A- 4 782 913
- US-A- 5 652 415

## Description

L'invention concerne l'insonorisation d'une "paroi".

Il s'agit en particulier d'insonoriser le compartiment moteur d'un véhicule automobile, afin de favoriser l'isolation acoustique de ce compartiment vis-à-vis de l'habitacle et/ou "d'absorber" le bruit dans ce compartiment moteur.

Dans le brevet de l'art antérieur US-A-5 633 067, il a déjà été proposé une mousse refendue, d'épaisseur constante, doublée d'un film étanche à l'air sur ses deux faces opposées. Un pièce d'insonorisation comprenant les caractéristiques du preambule de la revendication 1 est connu du document US-A-4 782 913.

Les caractéristiques dimensionnelles imposées impliquent qu'il n'y a très essentiellement absorption que des bruits haute fréquence (injecteur, claquements, ...). Certes, l'absorption de ces bruits haute fréquence (supérieure à 1000 Hz) permet de traiter les bruits perçus à l'extérieur du véhicule, lesquels bruits sont donc moins importants ; par contre, ils ne permettent pas de traiter de façon satisfaisante les bruits moteur à l'intérieur de l'habitacle où l'on a affaire à des fréquences basse (inférieures à 400 Hz et moyenne (entre 400 Hz et 1000 Hz).

Pour tenter d'apporter une solution à ces problèmes de bruits dans les basses et moyennes fréquences, ce brevet de l'art antérieur propose de jouer sur la présence d'une cavité à lame d'air et couches étanches.

Telle n'est pas la solution de l'invention qui propose :
- une insonorisation dans une large bande de fréquences (ou avec une sélectivité fréquentielle) que n'ont pas permis jusqu'à présent d'atteindre les matériaux insonorisants phoniques épais, doublés de films, et parallèlement
- une amélioration des performances des membranes résonnantes existantes qui peuvent potentiellement présenter des caractéristiques d'insonorisation sur une assez large bande, mais qui sont peu absorbantes.

Pour obtenir de telles caractéristiques performantes, il est donc tout d'abord proposé dans l'invention un procédé d'insonorisation comprenant les étapes selon la revendication 1.

Lors du travail d'étude lié à la présente invention, il s'est avéré que la disposition du film étanche, ainsi que la géométrie du bloc de matériau insonorisant phonique pouvaient avoir une influence sur les qualités d'insonorisation du produit final.

Pour favoriser la qualité de ce produit final et affiner la recherche d'une largeur de bande importante et/ou d'une sélectivité fréquentielle élevée, une autre caractéristique de l'invention conseille :
- de conférer à la première partie du moule, et plus particulièrement à la première surface, une forme en creux présentant une première partie sensiblement plane et une deuxième partie s'élevant depuis ladite première partie,
- de prévoir un film étanche de dimensions telles qu'il s'étende en regard de la totalité de la première surface du moule et recouvre à la fois la première face de la couche de matériau insonorisant et un bord périphérique s'étendant entre la première et la deuxième faces.

Pour favoriser la mise en oeuvre du film étanche sur le matériau insonorisant et les conditions de maintien de ce matériau vis-à-vis de la paroi à laquelle il doit être fixé, une autre caractéristique de l'invention conseille que l'on prévoit un film étanche de dimensions telles qu'il présente un débord (ou prolongement) s'étendant tout autour de la cavité de moulage, puis après démoulage on fixe de manière étanche ledit film à la paroi.

Avantageusement, l'introduction du matériau insonorisant dans la cavité de moulage comprend une injection sous pression de mousse de polyuréthanne.

Un tel choix est favorable à l'obtention d'une bonne qualité d'insonorisation.

En relation avec ce qui précède, un autre aspect de l'invention concerne une pièce d'insonorisation selon la revendication 5.

Selon une caractéristique avantageuse complémentaire, les cavités présentent des diamètres différents. Ainsi, en ajustant les diamètres en fonction des épaisseurs, on peut élargir la bande de fréquence d'insonorisation et/ou obtenir une sélectivité fréquentielle déterminée.

Avantageusement, pour favoriser l'étanchéité à l'air et/ou à l'eau, et plus généralement pour la qualité de l'insonorisation, il est conseillé que, la couche de matériau insonorisant présentant un bord périphérique s'étendant entre la première face et la deuxième face, ce bord périphérique soit recouvert par ledit film.

Dès lors que l'invention concerne en outre un ensemble comprenant la pièce d'insonorisation présentée ci-avant, ainsi qu'une paroi à laquelle la pièce est fixée (en particulier, une paroi de limitation d'une zone d'insonorisation, dans une cavité moteur d'un véhicule automobile), il est en outre conseillé:
- que la paroi ferme la deuxième extrémité des cavités, et/ou
- que le film présente un prolongement fixé à la paroi de manière étanche à l'air et plus généralement à l'ensemble des fluides présents dans le compartiment moteur.

Une description encore plus détaillée de l'invention va maintenant être fournie en relation avec les dessins annexés dans lesquels :
- les figures 1 et 2 montrent en vue schématique et en perspective un bloc de mousse traversé de cavités et doublé sur une face par un film étanche,
- les figures 3 et 4 montrent schématiquement en coupe un moule de fabrication en une seule pièce de l'ensemble constitué par le bloc de mousse et le film étanche précités,
- la figure 5 montre schématiquement, en coupe, une pièce monobloc pouvant être obtenue par le moule des figures 3 et 4, et
- la figure 6 illustre schématiquement la pièce de la figure 5 montée sur une paroi de fixation.

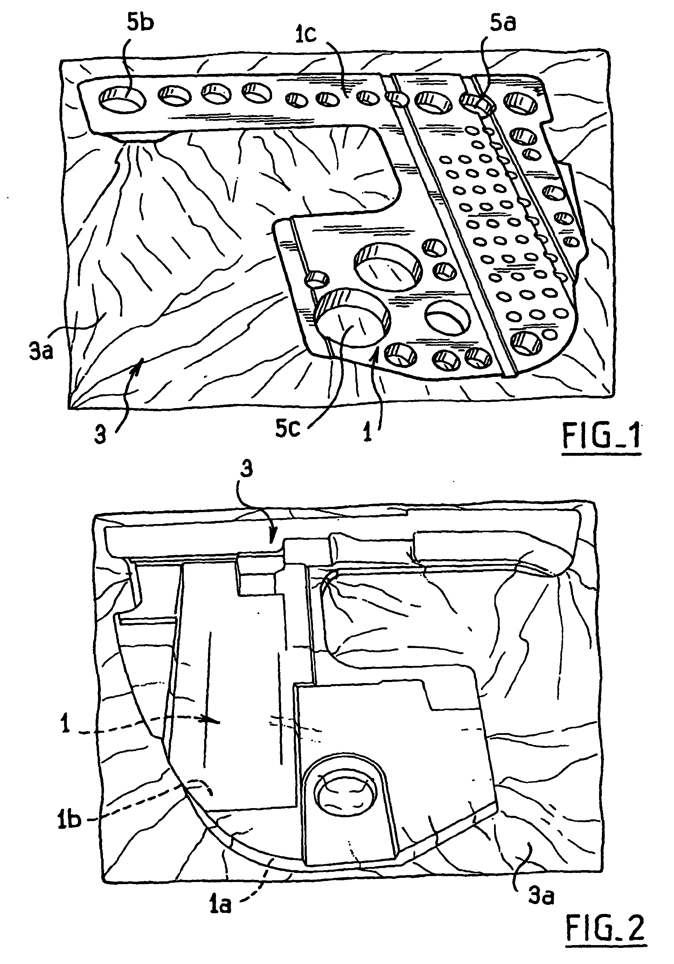

Sur la figure 1, on voit tout d'abord un bloc de matériau insonorisant phonique repéré dans son ensemble 1. Il s'agit d'un bloc de mousse à cellules ouvertes ayant des qualités d'absorption acoustique. Il peut en particulier s'agir d'une mousse de polyuréthanne.

Sous le bloc de mousse, apparaît un film 3.

Il s'agit d'un film en matière plastique, étanche et résistant à l'air et à l'eau (de manière générale, étanche aux gaz et à tout liquide présent dans le compartiment moteur).

Sur la figure 2, où l'on voit la pièce non plus du dessus comme sur la figure 1, "mais du dessous", on peut constater que le film étanche 3 recouvre entièrement la face inférieure du bloc de matériau insonorisant 1, ainsi que sa tranche (ou bord périphérique 1a). D'ailleurs, le film 3 s'étend au-delà du bord périmétrique du bloc de matériau insonorisant 1, par un prolongement périphérique 3a.

Sur la figure 1, et peut-être encore plus nettement sur la figure 2, on peut constater que le bloc de matériau insonorisant 1 présente sur l'une au moins de ses faces (face inférieure 1b sur la figure 2 et/ou face supérieure 1c sur la figure 1), des variations d'épaisseur. En l'espèce, ces variations d'épaisseur apparaissent sur la face inférieure et sur la face supérieure du bloc 1, lequel est par ailleurs traversé de part en part (entre ses faces supérieure et inférieure) de cavités débouchantes, ou ouvertes, telles que 5a, 5b ou 5c sur la figure 1.

Ainsi, on aura compris qu'en fonction de l'emplacement des cavités, leur hauteur sera plus ou moins importante, en fonction de l'épaisseur à cet endroit du bloc de matériau insonorisant 1.

On notera également qu'avantageusement, lesdites cavités telles que 5a, 5b, 5c, présentent des diamètres différents suivant les endroits où elles se trouvent, de sorte que ces cavités ont des volumes variables.

De préférence, ces cavités auront une forme cylindrique ou sensiblement cylindrique, avec donc individuellement un diamètre sensiblement constant, en particulier pour des questions de coût de fabrication.

Bien entendu, bien qu'ouvertes sur les deux faces opposés du bloc du matériau insonorisant 1, ces cavités sont en l'espèce toutes fermées par le film 3 du côté de la face dite "inférieure" 1b du bloc 1.

Comme déjà indiqué, il est conseillé d'utiliser le prolongement périphérique 3a du film 3, pour assurer une fixation de ce film, ainsi que du bloc à cavités acoustiquement absorbantes 1, à une paroi délimitant avantageusement une zone à insonoriser.

En pratique, la zone à insonoriser peut être la cavité moteur d'un véhicule automobile, la paroi de fixation étant alors une pièce située en regard du moteur, sous le moteur. Cette pièce de fixation peut être une pièce en matière plastique à laquelle le film 1 peut être fixé de toute manière appropriée (collage, soudage, ...).

On aura ainsi compris qu'en appliquant ainsi ce prolongement périphérique 3a du film 3 contre une surface de cette paroi de fixation, on aura nécessairement préalablement (dans l'exemple illustré) plaqué la face supérieure 1c du bloc de matériau insonorisant 1 contre cette même face de la paroi, fermant par là même l'extrémité des cavités 5a, 5b, 5c qui, jusqu'alors, s'ouvraient librement sur leur face supérieure 1c.

Eventuellement, on aurait pu choisir de fermer les cavités 5a, 5b, 5c, ... du côté de leur face supérieure 1c par un ou plusieurs autres éléments différents de la paroi de fixation.

A cet égard, on aurait d'ailleurs pu choisir d'enrober entièrement le bloc 1 par le film 3, ce qui aurait fermé les cavités à leurs extrémités, sur une face comme sur l'autre. Mais ceci n'est pas conseillé dans le mode préféré de réalisation, en particulier pour des question de coût et d'efficacité technologique.

Le but visé par la réalisation de l'ensemble constitué par la paroi de fixation et la pièce insonorisante comprenant le film 3 et le bloc de matériau insonorisant 1 est, dans l'hypothèse de l'insonorisation d'un compartiment moteur, d'absorber le bruit dans ce compartiment moteur suivant une large bande de fréquence (ou avec une sélectivité fréquentielle) plus large que ce qui a été jusqu'à présent proposé, en évitant en particulier des largeurs de bande, centrées uniquement sur les hautes fréquences.

La solution de l'invention permet d'améliorer l'efficacité des membranes résonnantes par l'introduction d'un effet d'absorption phonique dans les cavités 5a, 5b, 5c, la "membrane résonnante" étant en l'espèce constituée par la combinaison du film 3 et du bloc de matériau 1.

A cet égard, on conseille l'utilisation d'un film en polyuréthanne ou en polypropylène de quelques dizaines de microns d'épaisseur, et un bloc de matériau 1 en mousse de polyuréthanne d'une densité comprise entre 30 et 80 kg/m³, la variation d'épaisseur en particulier à l'endroit des cavités permettant d'obtenir des pièces multi-épaisseur avec une absorption sonore efficace à l'endroit des cavités.

En outre, la solution proposée permet de remplir les exigences d'étanchéité (gaz et liquide combinées si nécessaire) et de limitation de poids et d'encombrement.

On notera que d'un point de vue plus théorique, on sait que la performance en termes d'absorption sonore des membranes résonnantes à leur fréquence de résonance dépend directement du rapport surface/volume des cavités.

Or, jusqu'à présent, il n'avait pas été proposé à la connaissance des demandeurs, de solution permettant d'obtenir une absorption sonore élevée, avec une largeur de bande importante (ou éventuellement une sélectivité fréquentielle), ceci dans des conditions d'étanchéité et de poids satisfaisantes.

On notera encore que la solution de l'invention est performante en ce que les cavités "absorbantes acoustiquement" sont à leurs extrémités directement recouvertes par des absorbants efficaces, ce qui permet d'augmenter l'effet d'absorption acoustique sans altérer les propriétés des membranes, et en particulier, la sélectivité fréquentielle (si l'on souhaite y recourir).

Il est également possible ici de combiner l'effet produit par les films de recouvrement (film 3 en l'espèce) avec une mousse épaisse et les propriétés des membranes résonnantes.

L'absorption sonore obtenue est ainsi plus importante sur toute la gamme de fréquence visée et en particulier, dans la gamme des basses et moyennes fréquences pour un encombrement donné.

On va maintenant présenter les moyens et le procédé de fabrication préférés permettant d'obtenir une pièce d'insonorisation pouvant correspondre à celle illustrée sur les figures 1 et 2.

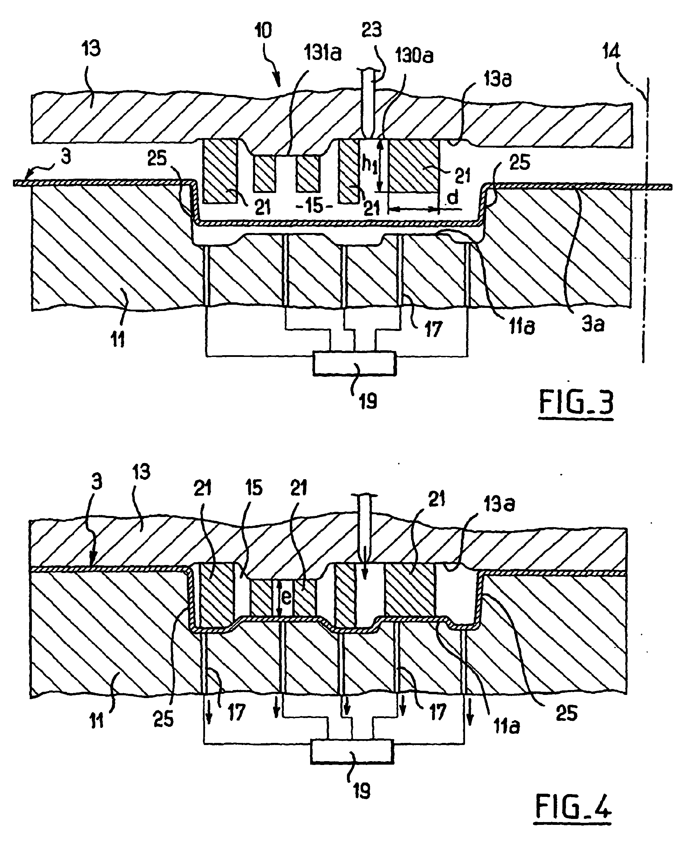

Sur la figure 3, on a représenté par la référence générale 10, un moule de moussage.

Le moule 10 comprend une matrice 11 et un poinçon 13 pouvant être rapprochés ou écartés l'un de l'autre suivant la direction 14.

Sur la figure 4, on voit que la matrice et le poinçon délimitent localement entre eux une cavité de moulage 15, par l'intermédiaire des surfaces 11a, 13a, respectivement en partie inférieure et en partie supérieure.

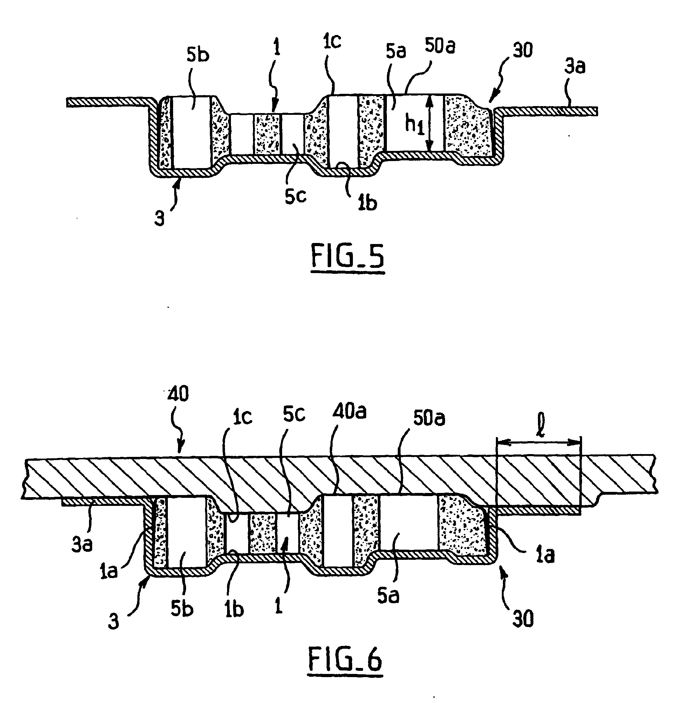

Les deux surfaces 11a, 13a, sont telles que l'épaisseur *e* de la cavité de moulage, dans l'état fermé du moule de la figure 4, n'est pas constante sur toute la surface, de sorte que la hauteur *h*_{*1*} de la pièce moussée 1 de la figure 5 n'est pas constante partout. Ainsi, en l'espèce les deux surfaces 11a, 13a, du moule présentent des formes localement en creux, avec localement des premières zones sensiblement planes s'élevant par endroit pour constituer des secondes zones en saillie (zones repérées respectivement 130a et 131a pour la surface 13a, sur la figure 3).

La matrice 11 est traversée par des conduits d'aspiration 17 reliés à des moyens d'aspiration d'air 19 pour plaquer contre la surface 11a le film 3 qui a été préalablement positionné à l'intérieur du moule comme on le voit sur la figure 3.

En direction de la cavité de moulage 15, des plots 21 rigides se dressent depuis la surface 13a.

Ces plots 21 présentent des hauteurs *h*_{*1*} différentes, au moins entre certains plots. Ils sont de préférence cylindres, de section sensiblement constante, et leurs diamètres *d* sont également différents, au moins entre certains plots.

Leur répartition est fonction de la géométrie des cavités 5a, 5b, 5c, que l'on veut obtenir dans la pièce 1, puisque c'est par ces plots 21 que l'on va créer toutes les cavités 5a, 5b, 5c, traversantes de la figure 1 (dans l'exemple illustré).

En position fermée du moule, comme sur la figure 4, les plots 21 viennent étroitement au contact du film 3 lui-même plaqué contre la surface 11a (contre laquelle il est aspiré), de sorte que les plots 21 s'étendent continûment entre les deux surfaces 11a, 13a, de façon étanche à leurs extrémités.

Au moins un canal 23 d'injection de matière plastique est prévu à travers le poinçon 13 pour amener la matière plastique de constitution de la pièce 1 au sein de la cavité interne de moulage 15, même si d'autres moyens d'amenée de matière auraient pu être retenus.

Sur les figures 3 et 4, on aura noté que, périphériquement, le film 3 présente son prolongement 3a, lequel prolongement ne sera pas recouvert par la matière plastique amenée dans la cavité de moulage 15, puisque cette cavité est périphériquement limitée par une paroi latérale 25 qui s'étend continûment, en limite extérieure, entre les deux surfaces 11a, 13a. Cette paroi latérale qui appartient à la matrice 11 permet de moulage le rembordement de la pièce moussée 1.

Brièvement, avec un tel moule, le process s'opère comme suit : alors que le moule est ouvert comme sur la figure 3, le film 3 est positionné entre la matrice et le poinçon. Puis, les moyens d'aspiration 19 plaquent le film 3 contre la surface 11a de la matrice et en particulier contre la paroi ou le rebord latéral périphérique 25, comme illustré à la figure 4.

Ensuite, le moule est fermé et la matière plastique de constitution de la pièce 1 est amenée (en l'espèce injectée sous pression) dans la cavité 15 qu'elle remplit entièrement, à l'endroit de son espace libre.

Ensuite, la matrice et le poinçon sont de nouveau écartés l'un de l'autre et la pièce 30 de la figure 5 est sortie, cette pièce comprenant donc le bloc de mousse 1 avec ses cavités traversantes 5a, 5b, 5c, et, lié à ce bloc, le film 3 qui obture l'extrémité inférieure de chacune desdites cavités (face 16). Le film 3 est lié à la face inférieure 1b et à la tranche 1a du bloc de mousse.

Ensuite, la pièce 30 est placée en regard d'une pièce 40 (telle qu'une pièce liée au compartiment moteur, une pièce sous-moteur), de sorte que l'extrémité supérieure encore ouverte des cavités (telle que 50a pour la cavité 5a) soit dirigée vers la surface 40a en regard de la pièce 40, pour être elle aussi fermée.

En l'espèce, la surface encore libre 1c du bloc de mousse 1 est plaqué étroitement contre la surface en regard 40a de la pièce 40.

Avantageusement, la longueur du prolongement 3a est telle qu'on peut ensuite le plaquer encore périphériquement directement contre la surface 40a de la pièce 40 sur une certaine longueur repérée *l* sur la figure 6. Ainsi, on va pouvoir utiliser cette bande périphérique extérieure pour fixer entre elles les pièces 30 et 40 par tout moyen approprié (collage, soudage, ...) et ce à nouveau de façon étanche aux gaz et aux liquides.

Le résultat en termes d'insonorisation, d'absorption phonique, de facilité de fabrication industrielle et de coût est performant.

## Revendications

1. Procédé d'insonorisation, en particulier sur un véhicule automobile, le procédé comprenant les étapes suivantes :
- utiliser un moule (10) présentant essentiellement un premier et un deuxième éléments (11, 13) définissant entre eux une cavité de moulage (15) délimitée sur chacun des deux éléments respectivement par une première et une deuxième surfaces (11a, 13a), l'épaisseur de la cavité de moulage (15) n'étant pas constante,
- introduire dans la cavité de moulage un film étanche à l'air (3),
- introduire dans la cavité de moulage des plots (21) de hauteurs différentes correspondant pratiquement à l'épaisseur de la cavité de moulage (15) à leur emplacement,
- introduire dans la cavité de moulage (15), au contact dudit film (3), un matériau insonorisant phonique (1) de sorte à obtenir une couche présentant une première face (1 b) venant au contact du film et une deuxième face (1 c) s'étendant en regard de la deuxième surface du moule (13a), et ménager dans la couche de matériau insonorisant phonique (1) des cavités (5a, 5b, 5c) s'étendant entre la première (1b) et la deuxième faces (1c) et correspondant aux plots (21).
- démouler la pièce obtenue qui comprend la couche de matériau insonorisant phonique (1) et le film (3) recouvrant sa première face,
- fixer ladite pièce à une paroi (40) limitatrice d'une zone à insonoriser, de telle sorte que les cavités (5a, 5b, 5c) soient closes sur la deuxième face (1c).

2. Procédé selon la revendication 1, **caractérisé en ce que** :
- on confère à l'une au moins des parties (11, 13) du moule, une forme en creux présentant une première zone sensiblement plane et une deuxième zone s'élevant depuis ladite première zone,
- on prévoit un film étanche de dimensions telles qu'il s'étende en regard de la totalité de la première surface du moule et recouvre à la fois la première face (1b) de la couche de matériau insonorisant et un bord périphérique (1 a) s'étendant entre la première et la deuxième faces.

3. Procédé selon la revendication 2, **caractérisé en ce que** l'on prévoit un film étanche de dimensions telles qu'il présente un prolongement (3a) s'étendant tout autour de la cavité de moulage, puis après démoulage on fixe de manière étanche ledit film à la paroi.

4. Procédé selon l'une quelconque des revendications précédentes, **caractérisé en ce que** l'introduction de matériau insonorisant (1) dans la cavité (15) de moulage comprend une injection sous pression de mousse de polyuréthanne.

5. Pièce d'insonorisation comprenant :
- un film (3) étanche à l'air,
- une couche (1) en matériau insonorisant comprenant une première face (1b) recouverte dudit film et une deuxième face (1c) opposée à la première, ladite couche renfermant une pluralité de cavités (5a, 5b, 5c), **caractérisée en ce que** les cavités (5A, 5B, 5C) s'étendent entre une première extrémité située sur la première face (1b) et une deuxième extrémité située sur la deuxième face (1c), ladite couche (1) présente des variations d'épaisseur entre sa première et sa deuxième faces (1b, 1c), les cavités (5a, 5b, 5c) présentant ainsi des hauteurs différentes entre leur première et leur deuxième extrémités.

6. Pièce selon la revendication 5, **caractérisé en ce que** ladite couche présente un bord périphérique (1a) s'étendant entre la première face et la deuxième face et ce bord périphérique est recouvert par ledit film (3).

7. Pièce selon l'une des revendications 5 et 6, **caractérisée en ce que** les cavités présentent des diamètres différents.

8. Ensemble comprenant :
- une paroi (40), et
- une pièce d'insonorisation (30) selon l'une quelconque des revendications 5 à 7,
**caractérisé en ce que** la pièce d'insonorisation (30) est fixée à la paroi (40).

9. Ensemble selon la revendication 8, **caractérisé en ce que** la paroi (40) clôt la deuxième extrémité des cavités.

10. Ensemble selon la revendication 8 ou la revendication 9, **caractérisé en ce que** périphériquement le film (3) présente un prolongement (3a) fixé de manière étanche à l'air à la paroi (40).

## Patentansprüche

1. Verfahren zur Schalldämpfung, insbesondere an einem Kraftfahrzeug, wobei das Verfahren die folgenden Schritte aufweist:
- Verwenden einer Form (10), die im wesentlichen ein erstes und ein zweites Element (11, 13) aufweist, die zwischen sich einen Formhohlraum (15) aufweisen, der auf jedem der zwei Elemente jeweils durch eine erste und eine zweite Oberfläche (11a, 13a) begrenzt ist, wobei die Dicke des Formhohlraumes (15) nicht konstant ist,
- Einführen eines gegen Luft dichten Filmes (3) in den Formhohlraum,
- Einführen von Blöcken (21) in den Formhohlraum, die unterschiedliche Höhen haben, welche praktisch der Dicke des Formhohlraumes (15) an Ihrem Platz entsprechen,
- Einführen eines phonischen schalldämpfenden Materials (1) in den Formhohlraum (15) in Kontakt mit dem Film (3) derart, daß eine Schicht erhalten wird, die eine erste Seite (1b) aufweist, die mit dem Film in Kontakt kommt, und eine zweite Seite (1c), die sich gegenüber der zweiten Oberfläche der Form (13a) erstreckt und in der Schicht aus phonischem schalldämpfendem Material (1) Hohlräume (5a, 5b, 5c) ausspart, die sich zwischen der ersten (1b) und der zweiten Seite (1c) erstrecken und den Blöcken (21) entsprechen,
- Entformen des erhaltenen Werkstückes, welches die Schicht aus phonischem schalldämpfendem Material (1) und den Film (3) enthält, der seine erste Seite bedeckt,
- Befestigen des Werkstückes an einer Wand (40), die eine Zone begrenzt, welche schallgedämpft werden soll, derart, daß die Hohlräume (5a, 5b, 5c) an der zweiten Seite (1c) geschlossen sind.

2. Verfahren nach Anspruch 1, **dadurch gekennzeichnet, dass**:
- man mindestens zu einem der Teile (11, 13) der Form eine vertiefte Form hinzugibt, die eine erste im wesentlichen ebene Zone und eine zweite Zone aufweist, die sich von der ersten Zone erhebt,
- man einen dichten Film mit solchen Abmessungen, daß er sich gegenüber der Gesamtheit der ersten Oberfläche der Form erstreckt und zugleich die erste Seite (1b) der Schicht aus schalldämpfendem Material bedeckt, und einen Umfangsrand (1a) vorsieht, der sich zwischen der ersten und der zweiten Seite erstreckt.

3. Verfahren nach Anspruch 2, **dadurch gekennzeichnet, daß** man einen dichten Film mit solchen Abmessungen vorsieht, daß er eine Verlängerung (3a) aufweist, die sich ganz um den Formhohlraum erstreckt, und man dann nach dem Entformen den Film in dichter Weise an der Wand befestigt.

4. Verfahren nach einem der vorhergehenden Ansprüche, **dadurch gekennzeichnet, daß** das Einführen des schalldämpfenden Materials (1) in den Formhohlraum (15) ein Einspritzen von Polyurethanschaum unter Druck aufweist.

5. Schalldämpfungselement mit:
- einem gegen Luft dichten Film (3),
- einer Schicht aus schalldämpfendem Material, das eine mit dem Film bedeckte erste Seite (1b) und eine der ersten gegenüberliegende zweite Seite (1c) aufweist, wobei die Schicht eine Vielzahl von Hohlräumen (5a, 5b, 5c) einschließt, **dadurch gekennzeichnet, daß** sich die Hohlräume (5a, 5b, 5c) zwischen einem ersten Ende, das auf der ersten Seite (1b) liegt, und einem zweiten Ende, das auf der zweiten Seite (1c) liegt, erstrecken, wobei die Schicht (1) Dickenunterschiede zwischen ihrer ersten und ihrer zweiten Seite (1b, 1c) aufweist und die Hohlräume (5a, 5b, 5c) so verschiedene Höhen zwischen ihrem ersten und ihrem zweiten Ende aufweisen.

6. Element nach Anspruch 5, **dadurch gekennzeichnet, daß** die Schicht einen Umfangsrand (1a) aufweist, der sich zwischen der ersten Seite und der zweiten Seite erstreckt, und daß dieser Umfangsrand von dem Film (3) bedeckt ist.

7. Element nach einem der Ansprüche 5 und 6, **dadurch gekennzeichnet, daß** die Hohlräume verschiedene Durchmesser aufweisen.

8. Aufbau mit:
- einer Wand (40) und
- einem Schalldämpfungselement (30) nach einem der Ansprüche 5 bis 7,
**dadurch gekennzeichnet, daß** das Schalldämpfungselement (30) an der Wand (40) befestigt ist.

9. Aufbau nach Anspruch 8, **dadurch gekennzeichnet, daß** die Wand (40) das zweite Ende der Hohlräume schließt.

10. Aufbau nach Anspruch 8 oder nach Anspruch 9, **dadurch gekennzeichnet, daß** der Film (3) am Umfang eine Verlängerung (3a) aufweist, die in gegen Luft dichter Weise an der Wand (40) befestigt ist.

## Claims

1. Method for soundproofing, in particular in a motor vehicle, the method comprising the following steps:
- using a mould (10) which substantially has a first and a second element (11, 13) which together define a moulding cavity (15) which is delimited on each of the two elements by a first and a second surface (11a, 13a), respectively, the thickness of the moulding cavity (15) not being constant,
- introducing an air-tight film (3) into the moulding cavity,
- introducing into the moulding cavity studs (21) having different heights which practically correspond to the thickness of the moulding cavity (15) at their location,
- introducing into the moulding cavity (15), in contact with said film (3), a soundproofing material (1) so as to obtain a layer which has a first face (1b) which comes into contact with the film and a second face (1c) which extends opposite the second surface of the mould (13a), and to provide in the layer of soundproofing material (1) cavities (5a, 5b, 5c) which extend between the first face (1b) and the second face (1c) and which correspond to the studs (21),
- removing from the mould the component obtained which comprises the layer of soundproofing material (1) and the film (3) which covers the first face thereof,
- fixing said component to a wall (40) which delimits a zone to be soundproofed, so that the cavities (5a, 5b, 5c) are closed at the second face (1c).

2. Method according to claim 1, **characterised in that**:
- a hollow shape is conferred on at least one of the portions (11, 13) of the mould and has a first zone which is substantially planar and a second zone which is raised from said first zone,
- a fluid-tight film is provided which is of such a size that it extends opposite the whole of the first surface of the mould and covers both the first face (1b) of the layer of soundproofing material and a peripheral edge (1a) which extends between the first and the second faces.

3. Method according to claim 2, **characterised in that** a fluid-tight film is provided which is of such a size that it has an extension (3a) which extends all the way around the moulding cavity, then after removal from said mould, said film is fixed to the wall in a fluid-tight manner.

4. Method according to any one of the preceding claims, **characterised in that** the introduction of soundproofing material (1) into the moulding cavity (15) comprises a pressurised injection of polyurethane foam.

5. Soundproofing component comprising:
- an air-tight film (3),
- a layer (1) of soundproofing material which comprises a first face (1b) which is covered by said film and a second face (1c) opposite the first, said layer having a plurality of cavities (5a, 5b, 5c), **characterised in that** the cavities (5a, 5b, 5c) extend between a first end located on the first face and a second end located on the second face (1c), the layer (1) has variations of thickness between the first face (1b) and the second face (1c) thereof, the cavities (5a, 5b, 5c) thus having different heights between their first and second ends.

6. Component according to claim 5, **characterised in that** said layer has a peripheral edge (1a) which extends between the first face and the second face and this peripheral edge is covered by said film (3).

7. Component according to either claim 5 or claim 6, **characterised in that** the cavities have different diameters.

8. Assembly comprising:
- a wall (40), and
- a soundproofing component (30) according to any one of claims 5 to 7,
**characterised in that** the soundproofing component (30) is fixed to the wall (40).

9. Assembly according to claim 8, **characterised in that** the wall (40) closes the second end of the cavities.

10. Assembly according to claim 8 or claim 9, **characterised in that**, peripherally, the film (3) has an extension (3a) which is fixed to the wall (40) in an air-tight manner.
